# EUROPEAN PATENT APPLICATION

(11) **EP 3 301 486 A1**
(43) Date of publication of application: **04.04.2018**
(21) Application number: 17194176.8
(22) Date of filing: 29.09.2017
(51) Int. Cl.: G01V 5/00

(54) **COMBINED DELIVERY APPARATUS FOR INSPECTION SYSTEM FOR CONTAINERIZED-CARGO, AND INSPECTION SYSTEM FOR CONTAINERIZED-CARGO**

(30) Priority: 29.09.2016 CN 201610865028
(71) Applicant: Nuctech Company Limited, TongFang Building, Shuangqinglu, Haidian District Beijing 100084 (CN)
(72) Inventor: XIA, Maohui, Beijing, Beijing 100084 (CN); MENG, Hui, Beijing, Beijing 100084 (CN); GAO, Kejin, Beijing, Beijing 100084 (CN); SUN, Shangmin, Beijing, Beijing 100084 (CN); SHI, Junping, Beijing, Beijing 100084 (CN); HU, Yu, Beijing, Beijing 100084 (CN)
(74) Representative: Carpmaels & Ransford LLP

(57) **Abstract**

Embodiments of the present disclosure relate to a combined delivery apparatus for an inspection system for containerized-cargo, and an inspection system for containerized-cargo, and especially, to a combined delivery apparatus for an inspection channel of the inspection system. A delivery apparatus is realized by combination in embodiments of the disclosure, which is customizable as per practical requirements of implementing an inspection function with a plurality of viewing angles and a plurality of radiation sources depending on site conditions, and also possess advantages of an effective reciprocating delivery of goods, a reduced land occupation and a simple construction.

## Description

### CROSS-REFERENCE TO RELATED INVENTION

The present disclosure claims the benefit of Chinese Patent Application Invention No. 201610865028.0 filed on September 29, 2016 in the State Intellectual Property Office of China, the whole disclosure of which is incorporated herein by reference.

### BACKGROUND OF THE INVENTION

### Field of the Invention

Embodiments of the present disclosure pertain to the technical field of the radiation inspection technology, and relate to a combined delivery apparatus for an inspection system for containerized-cargo, and an inspection system for containerized-cargo, and especially, to a combined delivery apparatus adapted in a scanning inspection system for flight cases, freight conveyance tray and bulky cargos on other occasions which is provided with a plurality of scanning viewing angles and a plurality of radiation sources.

### Description of the Related Art

Nowadays, Inspection on bulk goods at public places such as airport, customs and rail transit station, becomes increasingly concerned both at home and abroad, especially in the field of air freight. However, at present, in above situations, especially in the field of air cargo (e.g., aerial container) inspection, a predominant inspection approach is a manual open-package inspection (in which the container should be opened) or a radiation inspection by X-ray machine (through which only small items to be inspected may pass). Additionally or alternatively, an inspection device using the CT (i.e., computed tomography) technology may also be utilized for goods inspection. In general, in present inspection technology, it takes a relatively long time to perform one single inspection, resulting in a relatively low daily inspection quantity and a relative high inspection cost. Therefore, an inspection system for bulk goods, especially an inspection system for large air containerized cargos may be an imperative inspection device for security inspection at airport, customs and rail transit station. In prior art, a basic operation principle of the inspection system for large containers or freight conveyance tray is concluded that the goods of the flight cases or freight conveyance tray to be scanned may pass through the inspection channel steadily and smoothly via the delivery apparatus, and may be scanned by an imaging device under the control of a controller so as to generate scanning images which are mono or dual energy images at a single viewing angle in a horizontal direction (i.e., lateral perspective) or double viewing angles.

Since the X-ray machine has a relatively low penetrating power, any radiation source is strictly controlled in management of its use, such that there are many restrictions on the use of these products. In particular, for example, a common CT device usually implements a CT imaging inspection by adopting a horizontal passing-through scanning way in which the goods pass through horizontally, i.e., the object to be inspected passes therethrough horizontally, and a scanning system rotates around a path of the object to perform scanning, resulting in a relatively low pass rate of goods at these CT inspection system. Moreover, this type of CT inspection system is strictly restricted in structural dimension and penetrating power thereof, thus is not capable of inspecting aerial containers of a relatively large dimension. By way of example, most of existing devices are unable to inspect aerial containers each of which is provided with a length and a width both larger than 2 meters. Furthermore, as to above horizontal passing-through scanning way, it is required to occupy same areas of the ground at both sides of the inspection channel, resulting in a relatively large space occupation by such a device.

Currently, there may be following improvements concerning aforementioned problems. By way of example, it is proposed a large aerial containerized goods inspection system, which in particular comprises uploading and downloading roller conveyors and forms an operation platform having a height changeable upwards and downwards which is caused by a switch between high and low levels implemented by telescopic poles and a movable linkage structure thereof, so as to solve problems of relatively large occupied area and relatively complicated associated equipment of the inspection system in prior art, such that is may be not only suitable for inspection of air containerized cargo but also suitable for inspection of bulk goods at road, railway, and sea harbors without any inspection by opening package thereof.

However, there still exist some disadvantages in solutions of aforementioned inspection system for containerized cargo in the prior art. By way of example, each of above existing inspection devices typically implements a single scanning way, resulting in a restriction on choice of imaging ways. Even if various radiation imaging ways are proposed in the prior art, e.g., fluoroscopy imaging, multi-perspective imaging, and CT imaging, and the like, these different imaging ways are typically adopted corresponding to different scanning ways on goods by inspection systems. However, as to the inspection system for goods of the flight cases or freight conveyance tray widely used nowadays, images which are generated by scanning thereof may substantially be restricted to mono or dual energy images at a single viewing angle in a horizontal direction (i.e., lateral perspective) or double viewing angles, failing to meet requirements of scanning at various viewing angles (i.e., multi-perspective) with different images types, and resulting in a slow response speed, a long design and/or production cycle. In addition, during inspection on goods, sometimes it is necessary to carry out different scanning imaging on identical goods; however, existing inspection devices may not fulfill such requirements.

Therefore, typically, an integral inspection system for containerized cargo are usually obtained by those skilled in the art, by simple superposition of inspection sub-systems having different scanning functionalities, on some occasions in which enhanced and compound scanning inspection function(s) may be required.

In conclusion, the inspection systems for containerized cargo in the prior art may be conventional scanning inspection systems for containers, in which only limited scanning functionalities, e.g., conventional single scanning functionality may be integrated.

Otherwise, the inspection systems for containerized cargo in the prior art may alternatively be inspection systems with superposition of scanning functions for containers, which occupies relative large areas and thus are demanding in terms of technology of an integral conveyor thereof and expensive in manufacturing cost thereof. To be specific, once the integral conveyor is out of order, the inspection system should be wholly shut down for repair, service and maintenance. And though customers tend to choose a specific scanning sub-system having a single one of different scanning perspectives, there are relatively less options for existing integral conveyors in consideration of practical site conditions (such as waiting spaces occupied at both left and right sides of the inspection channel, spaces for goods to be uploaded or downloaded goods, length of the inspection channel required for incorporating a plurality of scanning sub-systems) and cost of particular type of conveyors (e.g., as to a plate conveyor, though it has a relatively large load-bearing capacity, it has an enhanced cost as dimensions of goods to be carried thereon increase; and as to a conveyor belt device in which parallel and spaced grilles are driven by sprocket wheel(s), though it may only be adapted to one-piece goods such as goods in a container or on a freight conveyance tray rather than small scattered goods, thus being relatively superior in economy as compared with the plate conveyor). Therefore, there are relatively less options for customization depending on customer's requirements for purchase on selection of scanning sub-systems and conditions of installation site. Then it is impossible either to obtain a tradeoff on carrying out scanning of multi-perspective and/or multiple radiation sources in a restricted space simultaneously, or to meet customer's requirements of flexibility in choices of both the scanning sub-system(s) and the conveyor(s) thereof, such that above defects result in restrictions in practical application.

Therefore, it is necessary to provide an improved inspection system for containerized cargo and a modular or combined conveyor/delivery apparatus which not only may integrate therein a scanning functionality at multi-perspective and/or by multiple radiation sources but also may implement customized combination of specific delivery apparatus depending on site conditions and customer's requirements.

### SUMMARY OF THE INVENTION

The embodiments of the present disclosure have been made to overcome or alleviate at least one aspect of the above mentioned disadvantages and/or shortcomings in the prior art.

Due to requirements of integrating multiple viewing angles (i.e., multi-perspective) or multiple radiation sources in a scanning inspection system for goods (especially for containerized cargo), and limitations on a dimensional aspect of delivery apparatus thereof by the installation site of the inspection system, and in view of consideration of cost, therefore, an improved design is constantly required, comprising requirements on improvement of the inspection system and its delivery apparatus.

Correspondingly, a technical purpose of the embodiments of the disclosure is to provide a combined delivery apparatus for an inspection system for containerized cargo, which is customizable depending on site conditions and cost and the like in the context that an inspection functionality at multi-perspective or by multiple radiation sources is constructed as practically required, and may ensure a constant, frequent and efficient goods delivery so as to obtain advantages of reciprocable delivery, relatively small occupied area and simple construction.

And another purpose of the embodiments of the disclosure is to provide an inspection system for the containerized cargo using above combined delivery apparatus.

Following technical solutions are adopted in exemplary embodiments of the invention for achieving the above desired technical purposes.

According to an aspect of the exemplary embodiment of the present disclosure, there is provided a combined delivery apparatus for an inspection system for containerized-cargo, through an inspection channel of which inspection system, the combined delivery apparatus is configured to delivery containerized-cargo, comprising: a translation device, which is provided with a movable horizontal bearing surface for the containerized cargo, and is configured to extend through the inspection channel; an uploading device, which is provided with a first bearing surface which is drivable and configured to bear and lift the containerized cargo; and a downloading device, which is provided with a second bearing surface which is drivable and configured to bear and lower the containerized cargo; the first bearing surface is movable at a first starting end thereof which is located adjacent to a ground, while the first bearing surface is also movable at a first terminal end thereof which is located to be adjacent to and aligned in level with a initiating end of the movable horizontal bearing surface of the translation device without any contact therebetween; the second bearing surface is movable at a second starting end thereof which is located to be adjacent to and aligned in level with a terminating end of the movable horizontal bearing surface of the translation device without any contact therebetween, while the second bearing surface is also movable at a second terminal end thereof which is located adjacent to a ground; and the translation device comprises at least one translation mechanism.

In an embodiment of the disclosure, the translation device is in a segmented configuration which comprises two translation mechanisms, and the two translation mechanisms are a translational feed device and a translational discharge device, which are arranged to be immediately adjacent to each other at neighboring ends thereof respectively without any contact therebetween.

In an embodiment of the disclosure, the neighboring ends of the translational feed device and the translational discharge device are respective inboard ends thereof which meet with each other by abutting without any interference therebetween, within or adjacent to the inspection channel.

In an embodiment of the disclosure, the translational feed device and the translational discharge device are essentially synchronized with each other in speed at the neighboring ends thereof.

In an embodiment of the disclosure, each of the uploading device and the downloading device is a roller conveyor which is configured to implement at least a lifting movement in a vertical direction, the roller conveyor comprising: an upper platform having a plurality of rollers mounted thereon; a movable linkage mechanism which comprises at least two link struts articulated mutually; a telescopic pole actuator, which comprises a telescopic pole body, a fixed end and a free end, the telescopic pole body being configured to be pivotably fixed on to the ground at the fixed end, and to be coupled to one of the link struts at the free end.

And according to a further exemplary embodiment of the disclosure, by way of example, the roller conveyor further comprises a lower platform disposed on the ground. The roller conveyor further comprises a lower platform disposed on the ground. The movable linkage mechanism is arranged between the upper platform and the lower platform and comprises two link struts which are arranged to intersect mutually by articulating at midpoints in lengthwise directions thereof respectively, the two link struts of the movable linkage mechanism being articulated at their upper ends with both end of the upper platform respectively, and being articulated at their lower ends with both ends of the lower platform respectively. The fixed end of the telescopic pole actuator is articulated with one of the two link struts at the lower end thereof, and the free end of the telescopic pole actuator is articulated with a portion of the other one the two link struts between the midpoint and the upper end thereof; and the plurality of rollers are arranged adjacent to and in parallel with one another, and orthogonal to a direction in which the containerized-cargo is to be delivered..

In an embodiment of the disclosure, one of extension and retraction actions of the telescopic pole actuator causes the link struts of the movable linkage mechanism to pivot around the intersection points, such that the upper platform implements one of lifting and lowering actions respectively.

In an embodiment of the disclosure, each end of the upper platform is pivotable around the movable linkage mechanism at a variable angle therebetween.

In an embodiment of the disclosure, at least one of the translational feed device and the translational discharge device is the roller conveyor.

In an embodiment of the disclosure, each of the translational feed device and the translational discharge device is a conveyor selected from the group consisting of the following: the roller conveyor; and a conveyor which is provided with successive surfaces, comprising one of the following: a roller table conveyor, a chain conveyor, a scraper chain conveyor, and a skid conveyor which implements thereon a segmented sliding delivery, among segments thereof.

In an embodiment of the disclosure, at least one of the translational feed device and the translational discharge device is a parallel chain-belt conveyor which is provided with chains running in a closed trajectory and rolls for load-carrying and thus is configured to implement a weight-carrying movement in a horizontal direction, comprising: a frame which is elongate and extends along the inspection channel, and is fixedly supported to be substantially parallel to the ground by a plurality of erective supporting pillars which are arranged to be spaced apart from one another in a length direction of the frame; a motor mounted on the frame; and a drive gear train which is arranged in the middle of the frame and connected with the motor, and end tension rollers fixedly supported at both ends of the frame, rotational axes of both the drive gear train and the end tension rollers being oriented to perpendicular to the length direction of the frame and parallel to a horizontal plane; a plurality of traction chains which extend in the length direction of the frame and run parallel to and spaced apart transversely from one another, are embedded in a periphery of a drive roller in the drive gear train and peripheries of the end tension rollers, and the plurality of traction chains are configured to be in tension around the drive roller and the end tension rollers, with upper side and lower side of each of the plurality of traction chains running in opposite directions along a closed oblong delivery path; and the plurality of traction chains are provided with tension rolls which are mounted thereon and arranged to extend transversely in parallel with one another at an interval thereamong, along the closed oblong delivery path in the length direction of the frame.

In an embodiment of the disclosure, the translational feed device and the translational discharge device are conveyors of a same type.

In an embodiment of the disclosure, the translational feed device and the translational discharge device have same dimensions.

In an embodiment of the disclosure, the combined delivery apparatus further comprises a buffering delivery device which is provided between the uploading device and the downloading device, and consists of three sections comprising: two transmission sections at both ends thereof and a buffer section provided therebetween, each of the three sections comprising a plurality of carrier rollers which are arranged in parallel and have rotational axes perpendicular to the direction in which the containerized-cargo is to be delivered; the carrier rollers in each of three sections are connected with respective driving motors via overrunning clutches, and the overrunning clutch of the transmission sections is further connected with the driving motor thereof via a motor reducer, and the overrunning clutches are configured that, when the containerized-cargo is transferred between the transmission sections and the buffer section, the carrier rollers in at least one of the three sections to which the containerized-cargo is to be transferred function as driven carrier rollers, and the carrier roller in at least one of the three sections out of which the containerized-cargo is to be transferred function as driving carrier rollers; and when the transfer of the containerized-cargo is to be completed, the carrier rollers in at least one of the three sections out of which the containerized-cargo is to be transferred function as driven carrier rollers and the carrier roller in at least one of the three sections to which the containerized-cargo is to be transferred function as driving carrier rollers.

In an embodiment of the disclosure, the buffer section has a length larger than or essentially equal to that of the inspection channel.

In an embodiment of the disclosure, the buffering delivery device functions as the translation device, and the two transmission sections abut closely the first terminal end of the first bearing surface of the uploading device and the second starting end of the second bearing surface of the downloading device respectively, without any direct contact among the two transmission sections and the first terminal end and the second starting end.

In an embodiment of the disclosure, the buffering delivery device is provided between the translational feed device and the translational discharge device, and the two transmission sections thereof abut closely the terminating end of the translation device on the translational feed device and the initiating end of the translation device on the translational discharge device, without any direct contact among the two transmission sections and the terminating end and the initiating end.

In an embodiment of the disclosure, additional delivery device which is of the same type of the buffering delivery device is further provided between the uploading device and the translational feed device.

In an embodiment of the disclosure, an additional delivery device which is of the same type of the buffering delivery device is further provided between the translational discharge device and the downloading device.

In an embodiment of the disclosure, at least one of the first terminal end of the uploading device and the second starting end of the downloading device comprises a blocking device which has a height set to be not more than a vertical displacement range of the containerized cargo by each of the uploading device and the downloading device.

In an embodiment of the disclosure, the buffering delivery device further comprises a chassis which is displaceable transversely.

In an embodiment of the disclosure, the buffering delivery device further comprises: a pair of tensioning wheels provided at both ends of a portion of the carrier rollers located upstream the buffering delivery device; a directional wheel provided downstream the buffering delivery device and centered on the chassis; and a transverse directional belt which is tensioned between the tensioning wheels and the directional wheel.

In an embodiment of the disclosure, the combined delivery apparatus further comprises a turnover device which comprises at least one turnover means provided at a bottom portion or a side portion of the bearing surface of the translational feed device.

In an embodiment of the disclosure, each of the at least one turnover means comprises: a tilting shaft fixed connected with a frame on which the translational feed device is mounted, and a plurality of turnover elements which extend radially around the tilting shaft and spaced apart regularly circumferentially; and a drive source coupled to the tilting shaft.

According to another aspect of the exemplary embodiment of the present disclosure, there is provided an inspection system for containerized cargo, comprising: a radiation source; a collimator; at least one detector arm fixation frame assembly, comprising a detector transverse arm and a detector erecting arm which are arranged to be coplanar and form a gantry tower construction collectively; and the combined delivery apparatus according to any one of preceding claims, which extends through from beneath the gantry tower construction, substantially perpendicular thereto.

The following description may relate to individual features and combinations thereof. It should be known that both aforementioned general description and following detailed description are only exemplary and explanatory ones, rather than limitations on generalized inventive concept on which the embodiments disclosed by the disclosure are based.

### BRIEF DESCRIPTION OF THE DRAWINGS

The above and other features and advantages of the present disclosure will become more apparent and a more comprehensive understanding of the present disclosure can be obtained, by describing in detail exemplary embodiments thereof with reference to the accompanying drawings, in which:
Fig.1 illustrates a schematic top view of an assembled structure of a scanning system incorporating an X-ray horizontal perspective scanning, according to a first embodiment of the disclosure;
Fig. 2 illustrates a delivery apparatus assembly 1 according to the first embodiment as illustrated in Fig. 1, in particular a schematic view of its uploading device 11 and downloading device 12 in an operation condition thereof;
Fig. 3 illustrates a schematic view of the delivery apparatus assembly 1 as illustrated in Fig. 2, in an operation condition thereof during detection/inspection;
Fig. 4 illustrates a structural schematic view of an X-ray horizontal perspective detector arm fixation frame assembly 2 of the X-ray horizontal perspective scanning system as illustrated in Fig.1;
Fig .5 illustrates a schematic top view of an assembled structure of a scanning system incorporating both an X-ray horizontal perspective scanning and an X-ray vertical perspective scanning, according to a second embodiment of the disclosure;
Fig. 6 illustrates a structural schematic view of a parallel chain-belt conveyor 4 in a delivery apparatus assembly 1' according to the second embodiment of the disclosure, and a partial enlarged view thereof;
Fig. 7 illustrates a structural schematic view of an X-ray perspective detector arm fixation frame assembly 2' of the scanning system as illustrated in Fig. 5;
Fig. 8 illustrates a schematic top view of an assembled structure of a scanning system incorporating an X-ray horizontal perspective scanning, an X-ray vertical perspective scanning and a neutron horizontal perspective scanning, according to a third embodiment of the disclosure; and
Fig. 9 illustrates a structural schematic view of a neutron horizontal perspective detector arm fixation frame assembly 2" of the scanning system as illustrated in Fig. 8.

Identical reference numerals are applied to refer to same or corresponding components or features, throughout the drawings.

### DETAILED DESCRIPTION OF EMBODIMENTS OF THE INVENTION

Exemplary embodiments of the present disclosure will be described hereinafter in detail with reference to the attached drawings, wherein the like reference numerals refer to the like elements. The present disclosure may, however, be embodied in many different forms, and thus the detailed description of the embodiment of the disclosure in view of attached drawings should not be construed as being limited to the embodiment set forth herein; rather, these embodiments are provided so that the present disclosure will be thorough and complete, and will fully convey the general concept of the disclosure to those skilled in the art.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

Respective dimension and shape of each component in the drawings are only intended to exemplarily illustrate the contents of the disclosure, rather than to demonstrate the practical dimension or proportion of elements, components and devices of embodiments of the disclosure.

Typically, an inspection system for goods utilizing an X-ray radiation source, especially an inspection system for aerial containers and/or freight conveyance tray belongs to the technical field of radiation inspection. Although embodiments of the disclosure takes the inspection system for aerial containers and/or freight conveyance tray by scanning with X-ray, e.g., by X-ray tube, various radiation sources of other types may also be used, such as, electron linear accelerator, isotope radiation source, neutron radiation source and the like. The inspection system for aerial containers and/or freight conveyance tray by scanning with X-ray is taken for example hereinafter, so as to illustrate exemplarily structural composition thereof and modes of action by cooperation of various components therein.

According to a general technical concept of the present disclosure, there is provided a combined delivery apparatus for an inspection system for containerized cargo, through an inspection channel of which inspection system, the combined delivery apparatus is configured to delivery containerized cargo, comprising: a translation device, which is provided with a movable horizontal bearing surface for the containerized cargo, and is configured to extend through the inspection channel; an uploading device, which is provided with a first bearing surface which is drivable and configured to bear and lift the containerized cargo; and a downloading device, which is provided with a second bearing surface which is drivable and configured to bear and lower the containerized cargo. The first bearing surface is movable at a first starting end thereof which is located adjacent to a ground, while the first bearing surface is also movable at a first terminal end thereof which is located to be adjacent to and aligned in level with a initiating end of the movable horizontal bearing surface of the translation device without any contact therebetween; the second bearing surface is movable at a second starting end thereof which is located to be adjacent to and aligned in level with a terminating end of the movable horizontal bearing surface of the translation device without any contact therebetween, while the second bearing surface is also movable at a second terminal end thereof which is located adjacent to a ground; and the translation device comprises at least one translation mechanism.

### First Embodiment

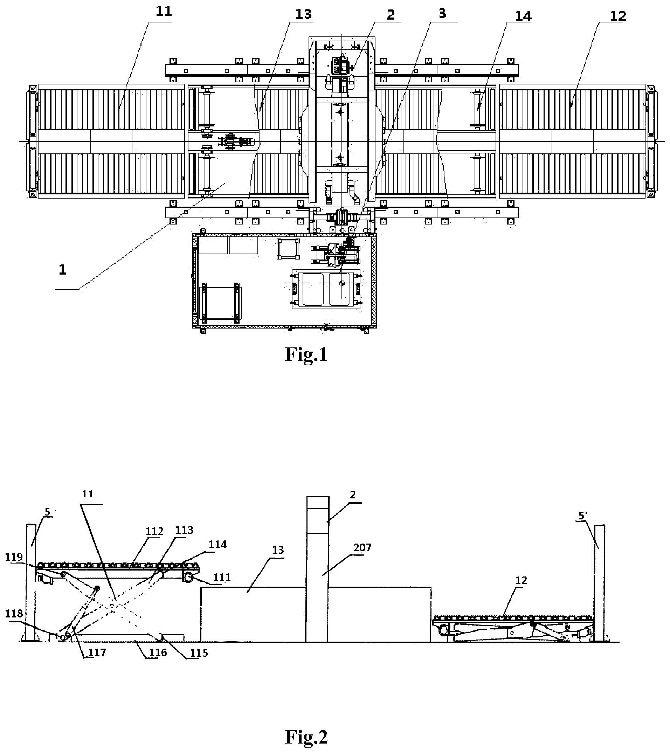

According to an exemplary embodiment of the present disclosure, there is provided a combined delivery apparatus for an inspection system for containerized cargo. By way of example, taken Figs 1-4 as the first embodiment so as to describe the inspection system for containers and/or freight conveyance tray by scanning with radiation ray, e.g., X-ray, as illustrated in Fig. 1, in which a combined delivery apparatus is used.

As illustrated in Fig. 1, i.e., the combined delivery apparatus is a delivery apparatus assembly 1, comprising:
a segmented translation device in the inspection channel, which is configured to translate cargo to be delivered into and out of the inspection channel of the inspection system, the segmented translation device in the inspection channel further comprising a translational feed device 13 configured to load the cargo to be inspected into the inspection channel and a translational discharge device 14 configured to output inspected cargo from the inspection channel, as illustrated in Fig. 1;
an uploading device 11 configured to upload from a first location adjacent to the ground and then lift the cargo to an operational height aligned in level with that of the segmented translation device in the inspection channel; and
a downloading device 12 configured to lower the cargo from the operational height aligned in level with that of the segmented translation device in the inspection channel to a second location adjacent to the ground.

And the translational feed device 13 and the translational discharge device 14 meet with each other at respective inboard ends thereof by abutting without any interference therebetween, within or adjacent to the inspection channel, and are essentially synchronized with each other in speed at the respective inboard ends.

Though a translation device in the inspection channel generally refers to an integral conveyor, in an embodiment of the disclosure, in consideration of relatively long stroke of the combined delivery apparatus at both sides of the inspection channel and flexibility of installation of the combined delivery apparatus at installation site thereof, the translation device in the inspection channel may be formed by a segmented combination by means of an overlap joint at the installation site, at the respective inboard ends of the translational feed device and the translational discharge device thereof which are arranged in a segmented configuration. In addition, by way of example, since the cargo frequently requires stopping shortly within the inspection channel when an inspection thereon is carried out in the inspection channel, so as to meet requirements of implementation of scanning at multiple angles from multiple orientations in the inspection system due to posture variation of the cargo to be inspected and actions of the detector(s) and detector arm(s) and the like therein, then in the embodiments of the disclosure the segmented translation device as illustrated in Fig. 1 is alternatively used as the translation device in the inspection channel, which is in a segmented configuration comprising a translational feed device 13 functioning as a upstream segment and a translational discharge device 14 functioning as a downstream segment, such that the cargo may be transferred from the translational feed device 13 smoothly to the translational discharge device 14 and remain an overall travelling path substantially unchanged, i.e., without changing original travelling path of the significantly, for example, so as to avoid an adverse departure of a travelling path of the translational discharge device 14 from that of the translational feed device 13 for carrying the cargo.

Then roller conveyors used for uploading or downloading are set forth in detail hereinafter. By way of example, as illustrated in Fig.2, the uploading device 11 is chosen to be the roller conveyor which is configured to implement at least a lifting movement in a vertical direction, comprising: an upper platform 112 having a plurality of rollers mounted thereon; a movable linkage mechanism 113 which comprises at least two link struts articulated mutually; a telescopic pole actuator 117 which comprises a telescopic pole body, a fixed end and a free end, the telescopic pole body being for example chosen to be a hydraulic cylinder piston rod and configured to be pivotably fixed on to the ground at the fixed end, and to be coupled to one of the link struts at the free end.

More specifically, in an exemplary embodiment of the disclosure, by way of example, the uploading device 11 which functions as the roller conveyor further comprises a lower platform 116 disposed on the ground. And the movable linkage mechanism 113 is arranged between the upper platform 112 and the lower platform 116 and comprises two link struts which are arranged to intersect mutually by articulating at midpoints in lengthwise directions thereof respectively, the two link struts of the movable linkage mechanism being articulated at their upper ends with both end (e.g., an upper hinged shaft 119, and an upper guide wheel 114) of the upper platform 112 respectively, and being articulated at their lower ends with both ends (e.g., a lower guide wheel 115, and a lower hinged shaft 118) of the lower platform 116 respectively. The fixed end of the telescopic pole actuator 117 is articulated with one of the two link struts at the lower end thereof (e.g., the lower hinged shaft 118), and the free end of the telescopic pole actuator is articulated with a portion of the other one the two link struts between the midpoint and the upper end thereof (e.g., the upper hinged shaft 119). Furthermore, the plurality of rollers are arranged adjacent to and in parallel with one another and orthogonal to a direction in which the containerized cargo is to be delivered. And the upper platform 112 of the uploading device 11 functions as the first bearing surface which is drivable and configured to bear and lift the containerized cargo to be inspected.

Similarly, the upper platform of the downloading device 12 also functions as the second bearing surface which is drivable and configured to bear and lower the inspected containerized cargo. Correspondingly, upper surfaces of the translational feed device 13 and the translational discharge device 14 function as the horizontal bearing surface for the containerized cargo. Both external upper and lower ends of the movable linkage mechanism are articulated with external ends of the upper platform 112 and lower platform 116 at an upper hinged shaft 119 and a lower hinged shaft 118, respectively. And an upper guide wheel 114 and a lower guide wheel 115 for delivery are received within slideways or chutes provided on side surfaces of the upper platform 112 and the lower platform 116 respectively such that respective guide wheels are slidable within corresponding one of slideways or chutes. Both ends of each of the telescopic pole actuator are articulated with the two link struts of the movable linkage mechanism 113, such that the upper platform 112 is located at a low-level position adjacent to the ground when the telescopic pole actuator 117 retract, i.e., the first bearing surface is movable at the first starting end thereof so as to be located adjacent to the ground, and then the containerized cargo to be inspected is to be transferred from the ground to the uploading device 11; and the upper platform 112 is located at an high-level position being aligned in level with whole of the translation device in the inspection channel, at the operational height, i.e., the first bearing surface is movable at the first terminal end thereof so as to be adjacent to and aligned in level with the initiating end of the movable horizontal bearing surface of the translation feed device 13 without any contact therebetween, and then the containerized cargo after inspection is to be transferred from the uploading device 11 to the translational feed device 13. Similarly, the second bearing surface is movable at the second starting end thereof so as to be located adjacent to and aligned in level with the terminating end of the movable horizontal bearing surface of the translation discharge device 14 without any contact therebetween, so as to receive from the translational discharge device 14 the containerized cargo which is inspected and to be lowered to the ground; and the second bearing surface is also movable at the second terminating end thereof so as to be located adjacent to the ground, then the containerized cargo is to be transferred from the downloading device 12 to the ground. Moreover, the movable linkage mechanism 113 is structured to be pivotable around one end thereof slightly at an angle so as to compensate for ground unevenness/roughness. Aforementioned roller conveyor 11 used for uploading and roller conveyor 12 used for downloading each has a frame bumper 5, 5' at respective external end thereof respectively so as to prevent any impact between the cargo and the delivery apparatus. And the upper platform is provided at the inner end thereof with a tractor 111 which is formed by a traction rope or traction ropes wound on a reel driven by a motor and configured to assist in pulling the containerized cargo to be uploaded and downloaded. Of course, there are also other embodiments in which each of the telescopic pole actuator 117 is structured to be in a form of a spiral threaded screw along with a bushing thereof or in other common telescopic forms for implementing extension and retraction.

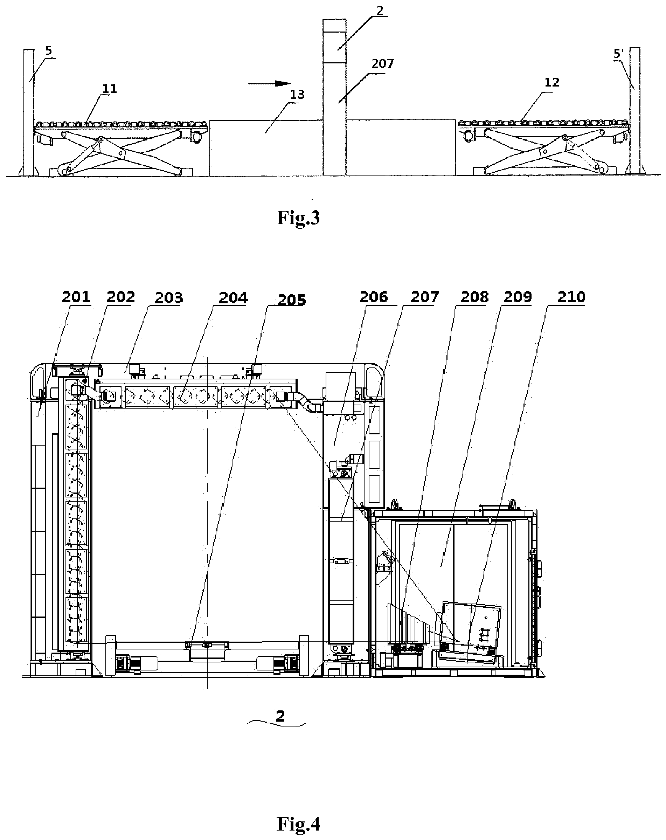

As illustrated in Fig. 2, the roller conveyor 11 used for uploading and the roller conveyor 12 used for downloading which are in the operation condition thereof are illustrated, wherein the roller conveyor 11 used for uploading is lifted to adjacent to the high-level position, and at that time the first bearing surface of the uploading device 11 is aligned in level with the movable horizontal bearing surface of the translation device, especially the translational feed device 13, so as to feed the cargo to the translational feed device 13, and wherein the roller conveyor 12 used for downloading is lowered to adjacent to the low-level position so as to release and discharge the cargo after inspection. As illustrated in Fig. 3, both the roller conveyor 11 used for uploading and the roller conveyor 12 used for downloading are shown to be at a height substantially aligned in level with that of translation device in the inspection channel, so as to facilitate smooth delivery and transfer of the cargo thereon, such that when the cargo is inspected and delivered from the translational feed device 14 to approach the downloading device 12, the second bearing surface of the downloading device 12 is changed to be aligned in level with the movable horizontal bearing surface of the translation device, especially the translational discharge device 14. And due to the existence of the plurality of rollers mounted on the upper platform 112 and arranged adjacent to and in parallel with one another and orthogonal to a direction in which the containerized cargo is to be delivered, the illustrated roller conveyor 11 used for uploading and roller conveyor 12 used for downloading may also function as common translational delivery devices so as to feed the one-piece goods e.g., goods packaged in a container; or small scattered goods.

Therefore, the roller conveyor as illustrated in Figs. 2 and 3 may be used to lift or lower the cargo, or feed the cargo slightly angularly around an end thereof or in a translational way.

By way of example, at least both the uploading device 11 and the downloading device 12 are the roller conveyor. In other words, in an embodiment of the disclosure, the uploading device 11, the downloading device 12, the translational feed device 13 and the translational discharge device 14 are for example of the same type, e.g., of the above roller conveyor type as illustrated in Fig. 1. Alternatively, the uploading device 11, the downloading device 12, the translational feed device 13 and the translational discharge device 14 are for example of different types, e.g., the uploading device 11 and the downloading device 12 are of the above roller conveyor type, while the translational feed device and the translational discharge device may be chosen from a group of following delivery mechanisms: a belt conveyor, a roller table conveyor, a chain conveyor, a scraper chain conveyor, and a skid conveyor which implements thereon a segmented sliding delivery among segments thereof, and a parallel chain-belt conveyor as hereinafter.

As compared with the belt conveyor, a conventional plate/apron/slat conveyor, or the scraper chain conveyor which is an improvement on the basis of the plate/apron/slat conveyor by covering a plurality of bearing slats or plates on a closed-loop belt transmission chain, aforementioned roller conveyor has inherent advantages lying in that, not only a translation may be implemented, but also lifting or lowering actions in the vertical direction, or even a fine adjustment at a single end slightly at an angle may also be realized, so as to provide a more superior adjustability on a posture of the cargo being delivered; especially in the case that the inspection channel is provided therein with a relatively long stroke of the combined delivery apparatus, two delivery devices are provided individually and separately for feeding the cargo into and out of the inspection channel, such that the delivery devices may implement their respective delivery with a certain angular adjustability to be adapted to the ground unevenness/roughness which may occur in the delivery stroke of the inspection channel even having the relatively long stroke therein, so as to cooperate with the ground at the installation site of the inspection system where infrastructure conditions fail to meet installation standards or criteria, for constructing an assembly of the combined delivery apparatus for the inspection system, resulting in a relatively strong and robust environmental adaptability.

In addition, by way of example, between respective inboard ends of the translational feed device 13 and the translational discharge device 14 meeting with each other by abutting without any interference therebetween, there may be additionally embedded a posture-variation delivery mechanism, such that the cargo may be inspected at desired scanning positions with desired postures thereof once entering the inspection channel, identical to or different from the postures thereof when the cargo is delivery outside the inspection channel.

Moreover, according to an inventive concept of the disclosure, in embodiments of the disclosure, there is further provided an inspection system for the containerized cargo. As illustrated in Fig. 1, it comprises: the delivery apparatus assembly 1; a detector arm fixation frame assembly 2, e.g., an X-ray horizontal perspective detector arm fixation frame assembly 2 as illustrated in Fig. 1, comprising a radiation source, a detector arm fixation frame, and detectors, and the like; a radiation ray manipulation cabin 3 provided outside the delivery apparatus assembly 1 and the detector arm fixation frame assembly 2; and sometimes an optional radiation shielding wall positioned outside the detector arm fixation frame assembly confining the radiation source and the delivery apparatus assembly for shielding and preventing radiation ray leakage to a surrounding environment. By way of example, the radiation ray manipulation cabin 3 is typically provided therein with a scanning control module, an image acquiring module, an operation inspector, a control system, a data processing unit, and the like. To be more specific, as illustrated in Fig. 4, the X-ray horizontal perspective detector arm fixation frame assembly 2 for example comprises: an X-ray accelerator 210 located within an accelerator cabin 209 arranged adjacent to the ground, which functions as the radiation source for producing and emitting the X-ray, the accelerator cabin 209 being inclined to the ground so as to ensure that a flare angle range of emergence of the ray may cover the detectors arranged in an array on the detector arm or arms; a calibrator 208 which is disposed adjacent to and in front of an emergence aperture for the X-ray of the accelerator cabin 209 and configured to make adjustment to parameters of the inspection system so as to calibrate the emergent X-ray before each inspection, for facilitating acquisition of reasonable inspection images; a collimator 207 installed in a collimator strut 206 and configured to adapt the emergent X-ray into a sectorial divergent shape or arc shape form so as to cover all detectors in an overall range of the detector arm or detector arms; a detector erecting arm strut 201 and a detector erecting arm 202 accommodated in an inner side thereof; and a detector transverse beam 203 and a detector transverse arm 204 accommodated in a lower side thereof, the detector transverse beam 203 being fixedly supported at both sides thereof on a top portion of the detector erecting arm strut 201 and a top portion of the collimator strut 206 such that the collimator strut, the detector transverse arm and the detector erecting arm form a stabilized gantry tower construction collectively in one vertical plane and the detectors are installed in an array in the detector arm fixation frame assembly, e.g., embedded in the detector transverse arm and the detector erecting arm respectively, so as to ensure that probing ends of the detectors in the detector transverse arm and the detector erecting arm are coplanar with a plane in which the ray is radiated, e.g., above sectorial divergent shape or arc shape form. A delivery apparatus 205 for delivery of the cargo to be inspected is located below the gantry tower construction and extend substantially perpendicularly therethrough. The delivery apparatus 205 is a portion of the delivery apparatus assembly 1, e.g., the translational feed device 13 as above. The gantry tower construction and the delivery apparatus form the inspection channel collectively which is closed radially, i.e., circumferentially but open at both sides in a direction in which the delivery apparatus extends, such that the inspection channel functioning as a site where a radiation inspection is implemented.

Specific operation steps and operation principle of the X-ray inspection system which possesses only a single scanning function, i.e., a forward and backward scanning from horizontal perspective, are set forth in detail hereinafter, in combination with specific embodiments of the disclosure. When a container to be inspected is being delivered by the delivery apparatus through a space in which a scanning is implemented by radiation rays, the X-ray emitted by the accelerator is firstly collimated by the collimator, then transmitted through the container to be inspected in a sectorial or arc shaped divergent form and received by the detectors embedded in the detector transverse arm and the detector erecting arm so as to be transformed into an electrical signal which is subsequently inputted into the image acquiring module in an equipment compartment, the electrical signal being delivered to the data processing unit and the operation inspector an finally displayed intuitively on a display on an operation console. During the whole inspection procedure, operational instructions are given by the operation console while specific inspection processes are controlled by the control system.

As illustrated in Fig. 4 in view of Fig. 1, the segmented translation device in the inspection channel is adapted to implement a delivery of the cargo in a straight motion path after a fine adjustment on the motion path, in a relatively long stroke, and is also adapted to implement a reciprocal delivery on and between the translational feed device and the translational discharge device, so as to implement a forward and backward scanning from horizontal perspective.

Similarly, in other embodiments, various modifications or variations may be implemented on the basis of above first embodiment.

### Second Embodiment

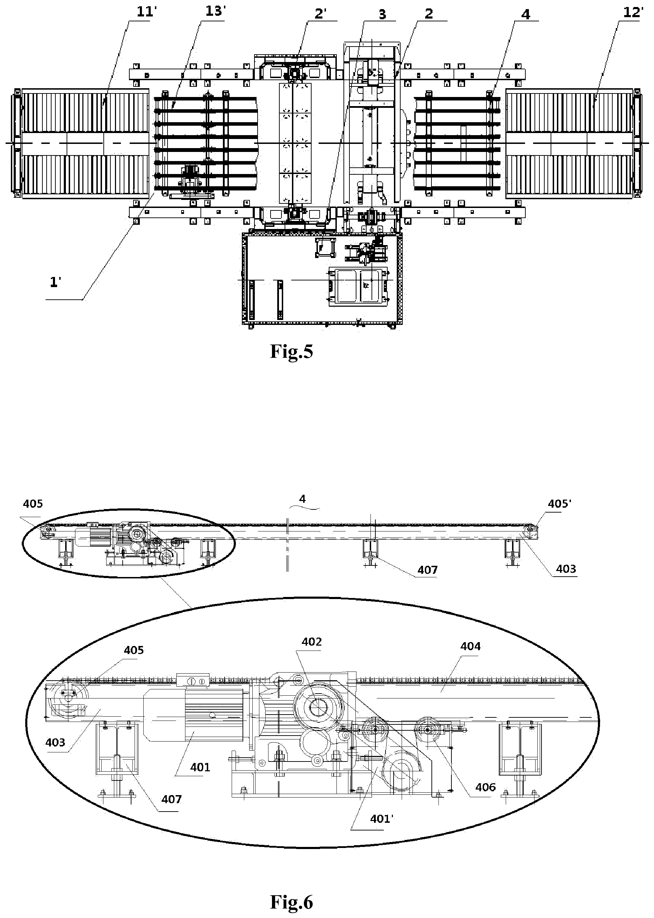

Additionally or alternatively, according to an inventive concept of the disclosure, on the basis of the inspection system for the containerized cargo which possesses only a single scanning inspection function, and a combined delivery apparatus thereof, in order to implement scanning functionalities from different perspective, e.g., an X-ray inspection system of both horizontal perspective and vertical perspective, then, a combined delivery apparatus for an inspection system of multiple inspection functionalities for the containerized cargo is further provided in another embodiment of the disclosure. As illustrated in Fig. 5, an inspection system which is provided with both the X-ray horizontal perspective detector arm fixation frame assembly and the X-ray vertical perspective detector arm fixation assembly, and its combined delivery apparatus, are provided in another embodiment of the disclosure so as to implement compound scanning inspection functions. As illustrated in Fig. 5, on some application occasions, when a more complete three-dimensional information image acquisition for the cargo is established which requires both a forward and backward scanning and a vertical perspective scanning on the containerized cargo simultaneously, then a horizontal perspective detector arm fixation frame assembly and a vertical perspective detector arm fixation frame assembly are provided in a gantry tower construction, in a direction parallel to the direction in which the inspection channel extends; correspondingly, in consideration of an increased translational stroke for feeding in a direction of the inspection channel, in the case that two aforementioned translational delivery mechanism of the roller conveyor type still function as the translational feed device and the translational discharge device, then there is necessarily an increase in requirements on dimensions and the stroke of the movable linkage mechanism formed by the two mutual intersecting link struts, resulting in a relatively more expensive cost. In practice, when the cargo inspected or being inspected is outputted from the inspection channel, in consideration that the object of the inspection are mainly integral bulky containerized cargo or freight conveyance tray, then a delivery mechanism having a successive surface is unnecessary; and in addition to a substantially horizontal translation, there is no strict requirements on the motion path of the cargo, during a process of discharge of the cargo after the inspection. Therefore, a parallel chain-belt conveyor which is improved on the basis of existing conveyor belt or scraper chain conveyor and adapted to output bulky containerized cargo after inspection is conceived in yet another embodiment of the disclosure, for partially replacing the segmented translation device in the inspection channel formed by the roller conveyors as exemplified in the first embodiment, especially the translational discharge device 14. Therefore, as illustrated schematically in Fig. 5, by way of example, the combined delivery apparatus is a delivery apparatus assembly 1', comprising: two aforementioned roller conveyors functioning as an uploading device 11' and a downloading device 12' respectively, and two parallel chain-belt conveyors as hereinafter functioning as a translational feed device 13' and a translational discharge device 14' respectively. Of course, in practical application, in consideration that the X-ray vertical perspective detector arm fixation frame assembly is additionally provided in the inspection channel, then, correspondingly, the translational feed device is provided with a length which may ensure that the containerized cargo should be delivered wholly in a steady and smooth manner through the inspection channel by the translational feed device. However, in contrast, after the inspection, a length of the translational discharge device is not as important as that of the translational feed device in significance thereof, such that the translational feed device and the translational discharge device may not be chosen necessarily to be of the same type or dimensions. By way of example, alternatively, three aforementioned roller conveyors may function as the uploading device 11', the downloading device 12', and the translational feed device 13' respectively, while a parallel chain-belt conveyor 4 as hereinafter may alternatively function as the translational discharge device.

Specific structure and operation principle of a parallel chain-belt conveyor which functions as an alternative translational discharge device are interpreted in an exemplary way hereinafter. The translational discharge device 4 as illustrated in Fig. 5 is in a form of the parallel chain-belt conveyor, with a specific structure as illustrated in the schematic front view and the partial enlarged view of Fig. 6.

As illustrated in Fig. 6, the translational discharge device 4 adopts a parallel chain-belt conveyor which is an improvement on the basis of the conveyor belt or the scraper chain conveyor, and comprises following components: a frame 403 which is elongate and extends along the inspection channel, and is fixedly supported to be substantially parallel to the ground by a plurality of erective supporting pillars 407 which are arranged to be spaced apart from one another in a length direction of the frame; a motor 401 which is mounted on the frame in a direction of a length thereof and functions as a drive source; and a drive gear train 401' which is arranged in the middle of the frame and connected with the motor, and end tension rollers 405 fixedly supported at both ends of the frame, rotational axes of both the drive gear train 401' and the end tension rollers 405 being oriented to perpendicular to the length direction of the frame and parallel to a horizontal plane, and both being driven to rotate so as to change directions of respective driving torques. A plurality of traction chains which extend in the length direction of the frame and run parallel to and spaced apart transversely from one another, are embedded in a periphery of a drive roller 402 in the drive gear train 401' and peripheries of the end tension rollers at both ends of the frame, and the plurality of traction chains are configured to be in tension around the drive roller and the end tension rollers, upon operation thereof, with upper side and lower side of each of the plurality of traction chains running in opposite directions along a closed oblong delivery path; and the plurality of traction chains are provided with tension rolls which are mounted thereon and arranged to extend transversely in parallel with one another at an interval thereamong, along the closed oblong delivery path in the length direction of the frame, such that a condition of tension of the traction chains may be ensured to apply an effective static friction force thereby onto the cargo delivered thereon for moving the cargo with the traction chains, and the traction chains function to assist in supporting and carrying the containerized cargo.

Transverse separations among the plurality of tractions chains 404 are for example arranged equidistantly, and more specifically, are arranged to be dense in the middle thereof but sparse at edges thereof, by way of example, so as to facilitate a support of the containerized cargo at a location relatively inside the conveyor. The traction chains are always tensioned during operation, such that upper and lower sides thereof are equal in length of respective strokes in parallel but opposite directions and thus there is no different loose/slack side or tight/tension side existing in the traction chains; besides, as such, there will be no drive failure due to an occurrence of a chain-stacking phenomena thereon, in order that the conveyor may also move reversely in the case that the cargo is being scanned in a reverse direction. Moreover, traction forces applied on various portions of the traction chains are substantially unchanged in the length direction of the frame, resulting in a free reciprocal drive transmission of the parallel chain-belt conveyor. Furthermore, since the plurality of chains which are spaced apart transversely covered by a plurality of tension rollers which are spaced apart longitudinally so as to support the containerized cargo, without any necessity of laying a covering, such as pieces of spacer material or a panel, so as to save material, to lower costs thereof and to simplify in structure. Besides, not only characteristics of a conventional conveyor belt, a conventional plate/apron/slat conveyor, or the scraper chain conveyor, such as relatively small land occupation, a simple structure, a reasonable design, may be reserved, but also its applicable scope may be enlarged due to a normal and frequent reciprocal use thereof and an improved efficiency in both delivery and inspection of the containerized cargo.

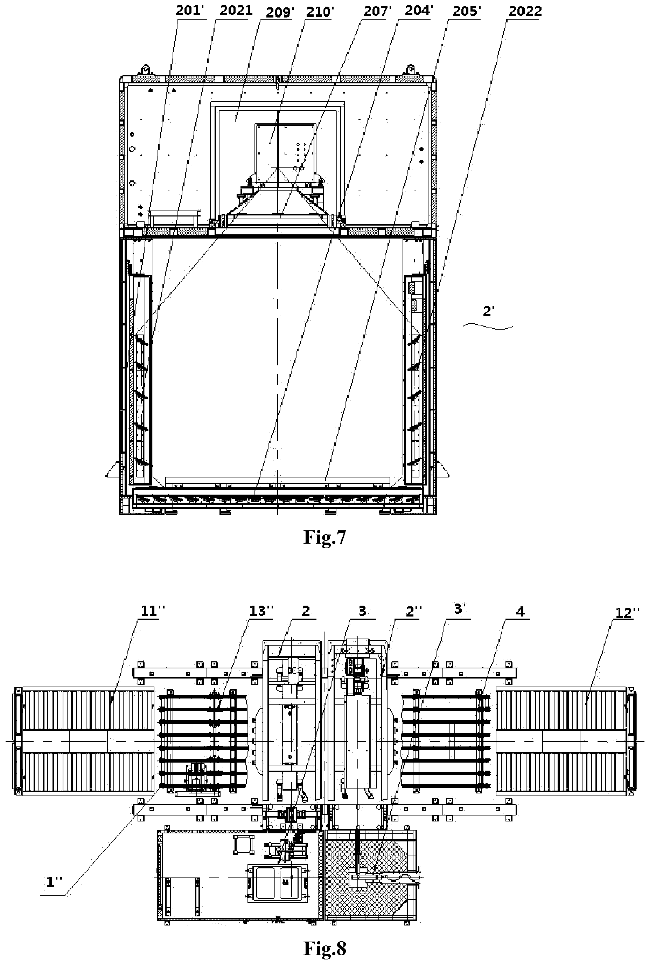

Furthermore, according to an inventive concept of the disclosure, an inspection system for the containerized cargo is provided in an embodiment of the disclosure, which has both the X-ray horizontal perspective detector arm fixation frame assembly and the X-ray vertical perspective detector arm fixation assembly, so as to implement compound scanning inspection functions. As such, as illustrated in Fig. 5, the inspection system for the containerized cargo comprises: the delivery apparatus assembly 1'; the X-ray horizontal perspective detector arm fixation frame assembly 2 and an X-ray vertical perspective detector arm fixation frame assembly 2', each comprising a radiation source, a detector arm fixation frame and detectors and the like; a radiation ray manipulation cabin 3 provided outside all of the delivery apparatus assembly 1, the X-ray horizontal perspective detector arm fixation frame assembly 2 and the X-ray vertical perspective detector arm fixation frame assembly 2'; and sometimes an optional radiation shielding wall positioned outside the detector arm fixation frame assembly confining the radiation source and the delivery apparatus assembly for shielding and preventing radiation ray leakage to a surrounding environment. By way of example, the radiation ray manipulation cabin 3 is typically provided therein with a scanning control module, an image acquiring module, an operation inspector, a control system, a data processing unit, and the like. To be more specific, the X-ray horizontal perspective detector arm fixation frame assembly 2 is already as illustrated in Fig. 4 and as set forth in detail in precedent first embodiment, without repeating here once again. Besides, as illustrated in Fig. 7, by way of example, the X-ray vertical perspective detector arm fixation frame assembly 2' comprises: two detector erecting arm struts 201', and a left detector erecting arm 2021 and a right detector erecting arm 2022 accommodated respectively in inner sides thereof; a detector transverse beam 204' provided adjacent to the ground between the left detector erecting arm 2021 and the right detector erecting arm 2022; an accelerator cabin 209' fixedly supported by both the left detector erecting arm 2021 and the right detector erecting arm 2022 between upper ends thereof, having an X-ray accelerator 210' which is provided within the accelerator cabin 209' and functions as the radiation source for producing and emitting the X-ray, with its emergence aperture pointing downwards, the accelerator cabin 209' being configured to ensure that a flare angle range of emergence of the ray may cover the detectors arranged in an array on the detector arms; a calibrator configured to calibrate the emergent X-ray before each inspection, for facilitating acquisition of reasonable inspection images; a collimator 207' installed on a lower surface of the accelerator cabin 209' and configured to adapt the emergent X-ray into a sectorial divergent shape or arc shape form which propagates vertically downwards so as to cover all detectors in an overall range of the detector arms. The collimator 207', the detector transverse beam 204', the left detector erecting arm 2021 and the right detector erecting arm 2022 form a stabilized gantry tower construction collectively in one vertical plane and the detectors are installed in an array in the detector arm fixation frame assembles 2, 2', e.g., embedded in the detector transverse arm and the detector erecting arms respectively, so as to ensure that probing ends of the detectors in the detector transverse arm and the detector erecting arm are coplanar with a plane in which the ray is radiated, e.g., above sectorial divergent shape or arc shape form. A delivery apparatus 205' for delivery of the cargo to be inspected is located below the gantry tower construction and extend substantially perpendicularly therethrough. The delivery apparatus 205' is a portion of the delivery apparatus assembly 1', e.g., the parallel chain-belt conveyor 4 as above. The gantry tower construction and the delivery apparatus form the inspection channel collectively which is closed radially, i.e., circumferentially but open at both sides in a direction in which the delivery apparatus extends, such that the inspection channel functioning as a site where a radiation inspection is implemented.

In addition to difference in arrangements of detector arms, the vertical perspective arm fixation frame assembly is similar to the horizontal perspective arm fixation frame assembly in specific operation mode, and are both familiar to those skilled in the prior art, without repeating here once again.

Thereby, the segmented translation device in the inspection channel which is formed collectively by at least one of the parallel chain-belt conveyor 4 and the aforementioned roller conveyor, is adapted to be provided with scanning assembles from both horizontal perspective and vertical perspective therein in a relatively long stroke, so as to output the containerized cargo with a relatively low cost and a relatively simple construction, and to implement a reciprocal delivery for a forward and backward scanning from horizontal perspective.

### Third Embodiment

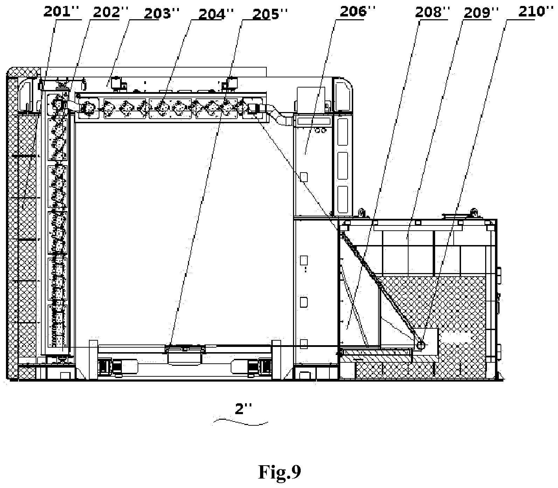

Additionally or alternatively, according to an inventive concept of the disclosure, on the basis of the inspection system for the containerized cargo which possesses a single scanning inspection function or compound scanning inspection functions, and a combined delivery apparatus thereof, then an inspection system for the containerized cargo may be further provided in yet another embodiment of the disclosure, which is provided with multiple radiation sources and thus may implement compound scanning inspection functions thereby; besides, a combined delivery apparatus therefor may also be provided herein. By way of example, an inspection system for the containerized cargo which is provided with both the X-ray horizontal perspective detector arm fixation frame assembly and a neutron scanning detector arm fixation frame assembly so as to implement compound scanning inspection functions with multiple radiation sources. As illustrated in Fig. 8, the combined delivery apparatus is a delivery apparatus assembly 1" similar to the delivery apparatus assembly 1' as in the second embodiment, comprising: an uploading device 11" and a downloading device 12", and a segmented translation device in the inspection channel. To be specific, two aforementioned roller conveyors function as an uploading device 11" and a downloading device 12" respectively, and two aforementioned parallel chain-belt conveyors function as a translational feed device 13" and a translational discharge device 14" respectively. In other words, both the translational feed device and the translational discharge device are in the form of the parallel chain-belt conveyor. Alternatively, the segmented translation device in the inspection channel may also be provided with one roller conveyor as set forth above which functions as the translational feed device 13" and the parallel chain-belt conveyor 4 which functions as the translational discharge device. Of course, as illustrated in Fig. 9, in practical application, in consideration that a neutron scanning detector arm fixation frame assembly is additionally provided within the inspection channel, then, correspondingly, the translational feed device is provided with a length which may ensure that the containerized cargo should be delivered wholly in a steady and smooth manner through the inspection channel by the translational feed device. However, in contrast, after the inspection, a length of the translational discharge device is not as important as that of the translational feed device in significance thereof, such that the translational feed device and the translational discharge device may not be chosen necessarily to be of the same type or dimensions. By way of example, alternatively, the segmented translation device in the inspection channel may comprises one roller conveyor device 13" as above functioning as the translational feed device, and one parallel chain-belt conveyor 4 functioning as the translational discharge device.

Moreover, according to an inventive concept of the disclosure, an inspection system for the containerized cargo is further provided, which is provided with both the X-ray horizontal perspective detector arm fixation frame assembly and a neutron scanning detector arm fixation frame assembly so as to implement compound scanning inspection functions with multiple radiation sources. As illustrated in Fig. 9, the neutron scanning horizontal perspective detector arm fixation frame assembly is similar to the X-ray horizontal perspective detector arm fixation frame assembly in structure, except that the neutron cabin 209" is arranged substantially on the ground without any inclined angle relative thereto, since such an arrangement and an emission characteristics of a neutron source may be sufficient to ensure that a flare angle range of emergence of the neutron ray may cover the detectors arranged in an array on respective detector arm. Besides, there is filled or covered densely with a neutron shielding material outside the detector erecting arm struts adjacent to the neutron cabin and inspection channel, so as to avoid any radiation pollution on environment due to outward leakage of the neutron ray.

Similarly, in other embodiments, a plurality of modifications and variations may be implemented on the basis of above exemplary embodiments.

In yet another embodiment, for example, the translational feed device and the translational discharge device in the translation device of the combined delivery apparatus may be chosen to have different dimensions, especially different lengths, so as to meet requirements of inspection systems for the containerized cargo which adopt different inspection ways. For example, the combined delivery apparatus in either the X-ray inspection system of both a horizontal perspective and a vertical perspective as illustrated in Fig. 7, or the inspection system of a horizontal perspective with both X-ray and neutron as illustrated in Fig. 8, is longer than the combined delivery apparatus in the X-ray inspection system of a horizontal perspective as illustrated in Fig. 4.

Since it is required that the combined delivery apparatus moves at a faster speed at portions thereof before entering the inspection channel and after exiting from the inspection channel than at a portion thereof within the inspection channel, and there may also be a sliding friction occurring at a location on the combined delivery apparatus where the translational feed device and the translational discharge device meet with each other due to a speed difference therebetween, then the cargo may slide to displace relatively rather than remain in a condition of relatively static, in relation to the combined delivery apparatus which carries the cargo, resulting in a clash or impact therebetween which may not only be adverse to quality of the inspection but also tend to affect service lifetime of transmission and/or power components in the delivery apparatus. Therefore, alternatively or additionally, in order to ensure that the cargo to be inspected is delivered within the inspection channel smoothly in an adjustable time period for inspection when the cargo undergoes an imaging inspection by the inspection system for the containerized cargo, and to implement a smooth transition at different speeds between the translational feed device and the translational discharge device, then, the combined delivery apparatus may for example comprise a buffering delivery device which is provided between the translational feed device and the translational discharge device. The buffering delivery device is formed by three sections comprising two transmission sections at both ends thereof and a buffer section provided therebetween, the two transmission sections thereof abutting closely the terminating end of the translation device on the translational feed device and the initiating end of the translation device on the translational discharge device, without any direct contact among the two transmission sections and the terminating end and the initiating end; and the buffering delivery device is provided with a length larger than or essentially equal to that of the inspection channel. Moreover, each of the three sections comprises a plurality of carrier rollers which are arranged in parallel and have rotational axes perpendicular to the direction in which the containerized-cargo is to be delivered, and the carrier rollers in each of three sections are connected with respective driving motors via overrunning clutches, each overrunning clutches being further connected with the driving motor thereof via a motor reducer. In addition, the buffer section further comprises a plurality of position transducers each configured to send a switching signal for instructing a switch between a quick speed and a slow speed. When the cargo is transferred between the transmission sections and the buffer section, e.g., from one transmission section to the buffer section, the cargo moves from the one of the two sections from which it is about to leave, towards the other one of the two sections which is a destination to be moved to. Then the motor of the transmission section is instructed such that the carrier rollers in the other one of the two sections which is the destination to be moved to may function as driven carrier rollers, by an overrunning clutch or clutches, resulting in that the cargo may gradually be transferred to the destination. Similarly, when the position transducers sense that the transfer substantially comes to an end, instructions are sent thereby, such that the carrier rollers in at least one of the three sections out of which the containerized-cargo is to be transferred may also function as driven carrier rollers by an overrunning clutch or clutches, resulting in that the cargo may move completely out of the one of the two sections from which it is about to leave, with substantially no speed difference. By such a buffering delivery device provided between the translational feed device and the translational discharge device, there is no need for any intermittent adjustment, stop, or transfer with a decreased speed; therefore, it may facilitate a successive and non-intermittent delivery of the cargo between or even among different sections of the combined delivery apparatus, without any impact due to sliding. And the cargo may travel through the inspection channel, with a generally uniform and adjustable speed in the buffer section.

In addition, the buffering delivery device may additionally be provided between the uploading device and the translational feed device, or between the translational discharge device and the downloading device, so as to implement a smooth transfer or transition of the cargo without any impact due to sliding and to facilitate a successive and non-intermittent delivery.

In another embodiment of the disclosure, by way of example, additionally, a stop may be provided on the buffer section of the buffering delivery device, for securing or fixing the cargo relatively when the cargo enters the buffer section as a whole. For example, the stop is provided on at least one end of the buffer section, and may be a component such as such as a barrier plate or a barrier bar, which is telescopic and thus extendable from a side or both sides of the buffer section towards a central portion thereof. When the position transducer or transducers may sense that the cargo is transferred completely onto the buffer section, the stop may then extend so as to prevent the cargo from disengaging or escaping during delivery thereof.

Alternatively, the uploading device or the downloading device may be provided with a blocking device which has a height set to be less than a vertical displacement range of the containerized cargo travelled by the uploading device or the downloading device, so as to stop the cargo from a bottom portion of the cargo during delivery, without impeding lifting and lowering actions of the cargo when it is to be transferred from the uploading device or the downloading device.

Besides, in yet another embodiment, by way of example, in order to ensure that the cargo to be inspected may be centered in a width direction of the combined delivery apparatus, i.e., transversely, and delivered substantially longitudinally, the combined delivery apparatus may additionally be provided with a functionality of moving the cargo transversely; e.g., such functionality may be implemented by the buffering delivery device having further a chassis which is displaceable transversely. In an embodiment of the disclosure, by way of example, the exemplary buffering delivery device as above may be provided with not only a chassis which is displaceable transversely, a pair of tensioning wheels provided at both ends of a portion of the carrier rollers located upstream the buffering delivery device; a directional wheel provided downstream the buffering delivery device and centered on the chassis; and a transverse directional belt which is tensioned between the tensioning wheels and the directional wheel. When the cargo which is carried on the buffering delivery device is required to be displaced transversely, the chassis is movable by a transversely centering operation such that the directional wheel thereon may be displaced centrally thereby, so as to change a transversely centered position delimited by the transverse directional belt wound thereon. This transversely centering operation may be applicable to items or goods having different dimensions and shapes, and thus may be implemented simultaneously when the cargo is delivered.

Furthermore, in still yet another embodiment of the disclosure, by way of example, in the case that the cargo is delivered and inspected by imaging simultaneously on one and the same combined delivery apparatus, since there may be some difference in shape, dimension and the like of cargos, then, in a condition that there occurs at least a posture variation of the cargo such as side roll or overturn which may be adverse to the inspection by imaging when the cargo reaches the uploading device or is transferred from the uploading device to the translational feed device, a flipping or turnover adjustment should be carried out on the cargo carried on the conveyor belt. In addition to or as an alternative to a manual flipping or turnover action (or even with the aid of instruments) applied on the cargo, the combined delivery apparatus may for example has a turnover device provided on the translational feed device and configured to carry out a flipping or turnover adjustment on the cargo automatically before the cargo enters the inspection channel, and the turnover device further comprises at least one turnover means provided at a bottom portion or a side portion of the bearing surface of the translational feed device. And each of the at least one turnover means comprises: a tilting shaft fixed connected with a frame on which the translational feed device is mounted, and a plurality of turnover elements which extend radially around the tilting shaft and spaced apart regularly circumferentially, such as turnover bars or turnover plates; and a drive source coupled to the tilting shaft. The plurality of turnover bars or turnover plates may be spaced apart at a fixed angle, e.g., 90 degrees, circumferentially and regularly.

The turnover device may for example be provided with a plurality of turnover means which are spaced apart at an angle and a gap thereamong sequentially in a direction in which the containerized-cargo is delivered, so as to cooperate to implement a turnover operation of the cargo with a relatively large dimension or an irregular profile.

Finally, in still yet another embodiment, in addition to aforementioned roller conveyor or the parallel chain-belt conveyor, the translation device and the buffering delivery device in the combined delivery apparatus may be alternatively or additionally embodied as other conveyors such as the roller table conveyor, the chain conveyor, the scraper chain conveyor, and the skid conveyor which implements thereon a segmented sliding delivery, among segments thereof.

In above detailed depictions, it is mainly set forth an inspection system which has a plurality of scanning functionalities and may be implemented in the inspection channel thereof, combination ways of specific conveyors of a combined delivery apparatus for the inspection system, especially a combination between the roller conveyor and the parallel chain-belt conveyor, the roller conveyor facilitating not only lifting and lowering actions, a translation, but also a fine adjustment at a single end slightly at an angle, and the parallel chain-belt conveyor being provided with no successive surface. Here, in order not to bring about any confusion in main inventive aspects of the disclosure, other common portions or work flow thereof in the inspection system may not be depicted in detail.

Therefore, the main inventive concept of the disclosure may be concluded as below, i.e., in practical application, in particular, the composition of the segmented translation device in the inspection channel may be chosen as required, e.g., depending on infrastructure conditions on site which should be taken into account comprehensively, such as the ground unevenness/roughness, the length of the stroke required by the inspection channel, and space requirements, cost consideration, and installation dimensions as required by the installation site, so as to implement a choice and a combination of specific conveyors, e.g., the combined delivery apparatus may comprise at least one roller conveyor as above and at least one parallel chain-belt conveyor, or may consist of parallel chain-belt conveyors completely, or otherwise may consist of roller conveyors completely.

Beneficial technical effects of the embodiments of the disclosure are listed as below.

Firstly, the combined delivery apparatus for containerized cargo occupies relatively less area, and thus may be chosen depending on requirements at installation site and be flexible in its combination and installation ways.

Secondly, each of optional roller conveyor and parallel chain-belt conveyor has different advantages, e.g., the former may implement lifting and lowering, translation, and pivoting around an upper surface at a single end thereof so as to compensate for ground unevenness/roughness; and the latter may implement effective load-bearing and efficient delivery of containerized cargo even with a simple structure thereof. And both of the two options are adapted to carry out reciprocal delivery so as to implement forward and backward scanning.

Finally, in the case that a cantilever frame system which combines a plurality of viewing angles, and a plurality of radiation sources are required, an enlarged delivery stroke may need different choices among combinations of delivery apparatus depending on different requirements so as to facilitate maintaining relatively low cost and a flexibility in customization while maintaining advantages of simple construction, convenient installation and efficient operation.

Various embodiments of the present application have been illustrated progressively, the same or similar parts of which can be referred to each other. The differences between each embodiment and the others are described in emphasis.

It should be appreciated for those skilled in this art that the above embodiments are intended to be illustrated, and not restrictive. For example, many modifications may be made to the above embodiments by those skilled in this art, and various features described in different embodiments may be freely combined with each other without conflicting in configuration or principle.

Although the disclosure is described in view of the attached drawings, the embodiments disclosed in the drawings are only intended to illustrate the preferable embodiment of the present disclosure exemplarily, and should not be deemed as a restriction thereof.

Although several exemplary embodiments of the general concept of the present disclosure, i.e., a combined delivery apparatus for an inspection system for containerized cargo and an inspection system for containerized cargo, have been shown and described, it would be appreciated by those skilled in the art that various changes or modifications may be made in these embodiments without departing from the principles and spirit of the disclosure and lie within the scope of present application, which scope is defined in the claims and their equivalents.

As used herein, an element recited in the singular and proceeded with the word "a" or "an" should be understood as not excluding plural of said elements or steps, unless such exclusion is explicitly stated. Furthermore, references to "one embodiment" of the present disclosure are not intended to be interpreted as excluding the existence of additional embodiments that also incorporate the recited features. Moreover, unless explicitly stated to the contrary, embodiments "comprising" or "having" an element or a plurality of elements having a particular property may include additional such elements not having that property.

### List of reference numerals

1, 1', 1" delivery apparatus assembly
11, 11', 11" uploading device
12, 12', 12" downloading device
13, 13', 13" translational feed device
14 translational discharge device
2 X-ray horizontal perspective detector arm fixation frame assembly
2' X-ray vertical perspective detector arm fixation frame assembly
2" neutron horizontal perspective detector arm fixation frame assembly
3 radiation ray manipulation cabin
3' neutron manipulation cabin
4 parallel chain-belt conveyor
5, 5' frame bumper
111 tractor
112 upper platform
113 movable linkage mechanism
114 upper guide wheel
115 lower guide wheel
116 lower platform
117 telescopic pole
118 lower hinged shaft
119 upper hinged shaft
201, 201', 201" detector erecting arm strut
202, 202" detector erecting arm
2021 left detector erecting arm
2022 right detector erecting arm
203, 203' transverse beam
204, 204', 204" detector transverse arm
205, 205', 205" delivery apparatus
206, 206' collimator strut
207, 207' collimator
208, 208' calibration device
209, 209' accelerator cabin
209" neutron cabin
210,210' X-ray accelerator
210" neutron generator
401 motor
401' drive gear train
402 drive wheel
403 frame
404 traction chains
405 tension wheel
406 tension roller
407 supporting pillar

## Claims

1. A combined delivery apparatus for an inspection system for containerized-cargo, through an inspection channel of which inspection system, the combined delivery apparatus is configured to delivery containerized-cargo, comprising:
a translation device, which is provided with a movable horizontal bearing surface for the containerized-cargo and is configured to extend through the inspection channel;
an uploading device, which is provided with a first bearing surface which is drivable and configured to bear and lift the containerized-cargo; and
a downloading device, which is provided with a second bearing surface which is drivable and configured to bear and lower the containerized-cargo,
wherein the first bearing surface is movable at a first starting end thereof which is located immediately adjacent to a ground, while the first bearing surface is also movable at a first terminal end thereof which is immediately adjacent to and aligned in level with an initiating end of the movable horizontal bearing surface of the translation device without any contact therebetween;
wherein the second bearing surface is movable at a second starting end thereof which is located immediately adjacent to and aligned in level with a terminating end of the movable horizontal bearing surface of the translation device without any contact therebetween, while the second bearing surface is also movable at a second terminal end thereof which is located immediately adjacent to the ground.

2. The combined delivery apparatus according to claim 1, wherein the translation device comprises a translational feed device and a translational discharge device, which are arranged separately and immediately adjacent to each other at neighboring ends thereof respectively, without any contact therebetween.

3. The combined delivery apparatus according to claim 2, wherein the neighboring ends of the translational feed device and the translational discharge device are respective inboard ends thereof which meet with each other by abutting without any interference therebetween, within or adjacent to the inspection channel.

4. The combined delivery apparatus according to claim 2, wherein the translational feed device and the translational discharge device are essentially synchronized with each other in speed at the neighboring ends thereof.

5. The combined delivery apparatus according to claim 2, wherein each of the uploading device and the downloading device is a roller conveyor which is configured to implement at least a lifting movement in a vertical direction, the roller conveyor comprising:
an upper platform having a plurality of rollers mounted thereon;
a movable linkage mechanism which comprises at least two link struts articulated mutually;
a telescopic pole actuator, which comprises a telescopic pole body, a fixed end and a free end, the telescopic pole body being configured to be pivotably fixed on to the ground at the fixed end, and to be coupled to one of the link struts at the free end;
and preferably,
wherein the roller conveyor further comprises a lower platform disposed on the ground; wherein the movable linkage mechanism is arranged between the upper platform and the lower platform and comprises two link struts which are arranged to intersect mutually by articulating at midpoints in lengthwise directions thereof respectively, the two link struts of the movable linkage mechanism being articulated at their upper ends with both end of the upper platform respectively, and being articulated at their lower ends with both ends of the lower platform respectively;
wherein the fixed end of the telescopic pole actuator is articulated with one of the two link struts at the lower end thereof, and the free end of the telescopic pole actuator is articulated with a portion of the other one the two link struts between the midpoint and the upper end thereof; and
wherein the plurality of rollers are arranged adjacent to and in parallel with one another, and orthogonal to a direction in which the containerized-cargo is to be delivered.

6. The combined delivery apparatus according to claim 5, wherein one of extension and retraction actions of the telescopic pole actuator causes the link struts of the movable linkage mechanism to pivot around the intersection points, such that the upper platform implements one of lifting and lowering actions respectively.

7. The combined delivery apparatus according to claim 5, wherein each end of the upper platform is pivotable around the movable linkage mechanism at a variable angle therebetween.

8. The combined delivery apparatus according to claim 5, wherein at least one of the translational feed device and the translational discharge device is the roller conveyor.

9. The combined delivery apparatus according to claim 5, wherein each of the translational feed device and the translational discharge device is a conveyor selected from the group consisting of the following:
the roller conveyor; and
a conveyor which is provided with successive surfaces, comprising one of the following: a roller table conveyor, a chain conveyor, a scraper chain conveyor, and a skid conveyor which implements thereon a segmented sliding delivery, among segments thereof.

10. The combined delivery apparatus according to claim 5, wherein at least one of the translational feed device and the translational discharge device is a parallel chain-belt conveyor which is provided with chains running in a closed trajectory and rolls for load-carrying and thus is configured to implement a weight-carrying movement in a horizontal direction, comprising:
a frame which is elongate and extends along the inspection channel, and is fixedly supported to be substantially parallel to the ground by a plurality of erective supporting pillars which are arranged to be spaced apart from one another in a length direction of the frame;
a motor mounted on the frame; and
a drive gear train which is arranged in the middle of the frame and connected with the motor, and end tension rollers fixedly supported at both ends of the frame, rotational axes of both the drive gear train and the end tension rollers being oriented to perpendicular to the length direction of the frame and parallel to a horizontal plane;
wherein a plurality of traction chains which extend in the length direction of the frame and run parallel to and spaced apart transversely from one another, are embedded in a periphery of a drive roller in the drive gear train and peripheries of the end tension rollers, and the plurality of traction chains are configured to be in tension around the drive roller and the end tension rollers, with upper side and lower side of each of the plurality of traction chains running in opposite directions along a closed oblong delivery path; and
wherein the plurality of traction chains are provided with tension rolls which are mounted thereon and arranged to extend transversely in parallel with one another at an interval thereamong, along the closed oblong delivery path in the length direction of the frame.

11. The combined delivery apparatus according to claim 9 or 10, wherein the translational feed device and the translational discharge device are conveyors of a same type,
preferably, wherein the translational feed device and the translational discharge device have same dimensions.

12. The combined delivery apparatus according to claim 1 or 2, further comprises a buffering delivery device which is provided between the uploading device and the downloading device, and consists of three sections comprising:
two transmission sections at both ends thereof and a buffer section provided therebetween, each of the three sections comprising a plurality of carrier rollers which are arranged in parallel and have rotational axes perpendicular to the direction in which the containerized-cargo is to be delivered,
wherein the carrier rollers in each of three sections are connected with respective driving motors via overrunning clutches, and the overrunning clutch of the transmission sections is further connected with the driving motor thereof via a motor reducer, and
wherein the overrunning clutches are configured that, when the containerized-cargo is transferred between the transmission sections and the buffer section, the carrier rollers in at least one of the three sections to which the containerized-cargo is to be transferred function as driven carrier rollers, and the carrier roller in at least one of the three sections out of which the containerized-cargo is to be transferred function as driving carrier rollers; and when the transfer of the containerized-cargo is to be completed, the carrier rollers in at least one of the three sections out of which the containerized-cargo is to be transferred function as driven carrier rollers and the carrier roller in at least one of the three sections to which the containerized-cargo is to be transferred function as driving carrier rollers,
preferably, wherein the buffer section has a length larger than or essentially equal to that of the inspection channel;
preferably, wherein the buffering delivery device functions as the translation device, and the two transmission sections abut closely the first terminal end of the first bearing surface of the uploading device and the second starting end of the second bearing surface of the downloading device respectively, without any direct contact among the two transmission sections and the first terminal end and the second starting end; and
preferably, wherein the buffering delivery device is provided between the translational feed device and the translational discharge device, and the two transmission sections thereof abut closely the terminating end of the translation device on the translational feed device and the initiating end of the translation device on the translational discharge device, without any direct contact among the two transmission sections and the terminating end and the initiating end,
more preferably, wherein additional delivery device which is of the same type of the buffering delivery device is further provided between the uploading device and the translational feed device; and
more preferably, wherein an additional delivery device which is of the same type of the buffering delivery device is further provided between the translational discharge device and the downloading device.

13. The combined delivery apparatus according to claim 1, wherein at least one of the first terminal end of the uploading device and the second starting end of the downloading device comprises a blocking device which has a height set to be not more than a vertical displacement range of the containerized-cargo by each of the uploading device and the downloading device;
preferably, the buffering delivery device further comprises a chassis which is displaceable transversely,
more preferably, wherein the buffering delivery device further comprises:
a pair of tensioning wheels provided at both ends of a portion of the carrier rollers located upstream the buffering delivery device;
a directional wheel provided downstream the buffering delivery device and centered on the chassis; and
a transverse directional belt which is tensioned between the tensioning wheels and the directional wheel.

14. The combined delivery apparatus according to claim 2, further comprises a turnover device which comprises at least one turnover means provided at a bottom portion or a side portion of the bearing surface of the translational feed device,
preferably, wherein each of the at least one turnover means comprises:
a tilting shaft fixed connected with a frame on which the translational feed device is mounted, and
a plurality of turnover elements which extend radially around the tilting shaft and spaced apart regularly circumferentially; and
a drive source coupled to the tilting shaft.

15. An inspection system for containerized-cargo, comprising:
a radiation source;
a collimator;
at least one detector arm fixation frame assembly, comprising a detector transverse arm and a detector erecting arm which are arranged to be coplanar and form a gantry tower construction collectively; and
the combined delivery apparatus according to any one of preceding claims, which extends through from beneath the gantry tower construction, substantially perpendicular thereto.
